# EUROPEAN PATENT APPLICATION

(11) **EP 2 597 785 A2**
(43) Date of publication of application: **29.05.2013**
(21) Application number: 11809869.8
(22) Date of filing: 20.07.2011
(51) Int. Cl.: H04B 7/26, H04W 52/24, H04W 52/22, H04W 88/02, H04W 88/08

(54) **METHOD FOR MITIGATING INTERFERENCE CAUSED BY BASE STATIONS, AND TERMINALS AND BASE STATIONS SUPPORTING THE METHOD**

(30) Priority: 19.07.2011 KR 20110071497; 19.07.2011 KR 20110071502; 18.11.2010 KR 20100115150; 21.07.2010 KR 20100070681
(71) Applicant: Humax Co., Ltd., Yongin-si, Gyeonggi-do 449-934 (KR)
(72) Inventor: YIE, Chung Ku, Incheon 403-762 (KR); KIM, Min Sung, Anyang-si Gyeonggi-do 413-719 (KR); OH, Jeong Hwan, Seoul 135-514 (KR)
(74) Representative: Vossius & Partner
(86) International application number: PCT/KR2011/005349
(87) International publication number: WO 2012/011742

(57) **Abstract**

Provided is a method of mitigating interference caused by a base station. The method includes (a) determining whether there is an accessible base station among one or more base stations, and (b) sequentially determining channel information, which enables minimization of transmission power of each of the base stations, by base station among channel information between each of the base stations and a terminal to transmit the determined channel information to each of the base stations until an accessible base station is found when there is no accessible base station.

## Description

### [Technical Field]

The present invention relates to a wireless communication system, and more particularly, to a method of mitigating interference caused by a base station.

### [Background Art]

In a wireless communication system, a channel state is deteriorated due to a geographical condition in a cell, a distance between a terminal and a base station, or movement of the terminal, and thus, communication between the terminal and the base station cannot smoothly performed.

For example, even in a service area of a base station, a radio wave shadow area is formed due to a sealed building such as an office or a house. When a terminal is located in a radio wave shadow area, smooth communication between a base station and a terminal cannot be performed because a channel state between the base station and the terminal is poor.

For this reason, the use of a small cell in a macro cell was proposed in 3rd Generation Partnership Project (3GPP) series Long Term Evolution (LTE) and LTE advanced systems or an IEEE 802.16 series communication system. By using the small cell, the capacity of a wireless communication system can be increased at low cost.

Here, the small cell denotes a small cell area that is formed by a small base station accessing a mobile communication core network through a wideband network installed in a building such as an office or a house.

Such small cells are categorized into a Closed Subscriber Group (CSG) type enabling the use of only specific users, an open access type allowing the access of general users, and a hybrid access type using combination of the two types according to access restriction.

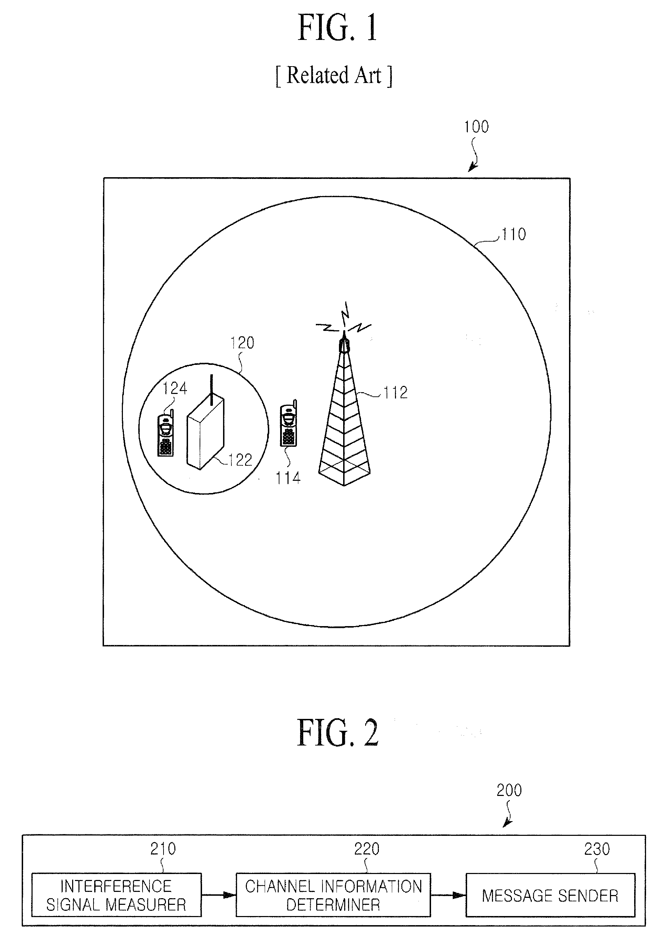

FIG. 1 is a diagram illustrating a configuration of a general wireless communication system in which there are both a macro cell and a small cell. As illustrated in FIG. 1, a wireless communication system 100 includes a macro base station 112 managing a macro cell 110, and a first small base station 122 managing a first small cell 120.

The macro base station 112 provides a communication service to a first terminal 114 located in the macro cell 110. The first small base station 122 managing the first small cell 120 provides a communication service to a second terminal 124 located in the first small cell 120.

In the wireless communication system having the above-described configuration, the first small base station 122 acts as a serious interference source of the first terminal 114 that receives a service from the macro base station 112.

As described above, when the small base station 122 acts as the interference source to the first terminal 114, the first terminal 114 cannot normally receive a sync signal and a control signal from the macro base station 112, and thus, the first terminal 112 cannot receive a normal service from the macro base station 112.

### [Disclosure]

### [Technical Problem]

An aspect of the present invention is directed to a method of mitigating interference caused by a base station, and a terminal and a base station for supporting the same.

Additional advantages and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### [Technical Solution]

To achieve these and other advantages and in accordance with the purpose of the invention, as embodied and broadly described herein, there is provided a method of mitigating interference caused by a base station, which includes: (a) determining whether there is an accessible base station among one or more base stations; and (b) sequentially determining channel information, which enables minimization of transmission power of each of the base stations, by base station among channel information between each of the base stations and a terminal to transmit the determined channel information to each of the base stations until an accessible base station is found when there is no accessible base station.

In another aspect of the present invention, there is provided a method of mitigating interference caused by a base station, which includes: receiving a message, including a Precoding Matrix Indicator (PMI) for minimizing transmission power for a terminal among a plurality of PMIs for the base station, from the terminal; and forming a beam pattern for the terminal on the basis of the PMI included in the message.

In another aspect of the present invention, there is provided a terminal that includes:an interference signal measurer measuring, when there is no accessible base station among one or more base stations, an interference signal of each of the base stations; a channel information determiner sequentially determining channel information, which enables minimization of transmission power of each of the base stations, by base station among channel information on the each of the base stations until the accessible base station is found; and a message sender generating a message comprising the determined channel information, and sending the generated message to a corresponding base station.

In another aspect of the present invention, there is provided a base station that includes: a message receiver receiving a message, including a PMI for minimizing transmission power for an uncamped-on terminal, from the terminal; and a beam pattern former forming a beam pattern for the terminal on the basis of the received PMI.

In another aspect of the present invention, there is provided a method of mitigating interference caused by a base station, which includes: receiving an access request from a first terminal that receives a service from a first base station; allocating a resource for the first terminal when the access request is received; and transmitting data to the first terminal through the allocated resource, wherein the base station is a small base station being a Closed Subscriber Group (CSG) type, and the first terminal is not included in a CSG of the base station.

The method of mitigating interference caused by a base station further comprises determining a resource use rate of the base station, wherein in the allocating of a resource, when the resource use rate of the base station is equal to or less than a predetermined value, the resource is allocated to the first terminal.

In another aspect of the present invention, there is provided a method of mitigating interference caused by a base station, which includes: determining whether interference to a terminal is caused by the base station in a downlink; transmitting an access request for the base station when it is determined that interference is caused by the base station; and receiving, when a resource is allocated by the base station in response to the access request, data from the base station through the allocated resource.

In the determining of interference, when intensity of a signal transmitted from the base station is at least greater by a threshold value than a signal transmitted from a first base station providing a service to the terminal, interference is determined as being caused by the base station.

In another aspect of the present invention, there is provided a base station that includes: a processor allocating a resource to a terminal when an access request is received from the terminal receiving a service from a macro base station; and an RF unit transmitting a downlink control signal and downlink data to the terminal through the resource allocated by the processor, wherein the terminal is not included in a CSG of the base station.

The processor determines a resource use rate of the base station, and, when the resource use rate is equal to or less than a predetermined value, the processor allocates the resource for the terminal.

Thehe processor determines a degree of interference to the terminal, and, when the degree of interference to the terminal is equal to or less than a threshold value, the processor allocates the resource for the terminal.

In another aspect of the present invention, there is provided a terminal that includes: a processor determining whether interference is caused by a femto base station being a Close Subscriber Group (CSG) type and, when it is determined that interference is caused by the femto base station, generating an access request for the femto base station; and an RF unit transmitting the access request generated by the processor to the femto base station, and receiving a downlink control signal and downlink data from the femto base station through the resource allocated by the femto base station in response to the access request.

It is to be understood that both the foregoing general description and the following detailed description of the present invention are exemplary and explanatory and are intended to provide further explanation of the invention as claimed.

### [Advantageous Effects]

According to the present invention, when a small base station is determined as an interference source to a terminal receiving a service from a macro base station, in order to minimize interference power due to the small base station, the terminal transmits a request for minimizing the interference power to the small base station, or accesses the small base station, thus mitigating interference caused by the small base station.

Especially, even when a small base station causing interference is a Closed Subscriber Group (CSG) type and a terminal affected by the interference caused by the small base station is in a state before the terminal is camped on the small base station, the present invention can effectively mitigate the interference caused by the small base station.

Moreover, by mitigating interference caused by a small base station, a terminal receiving a service from a macro base station can normally receive a communication service.

### [Description of Drawings]

The accompanying drawings, which are included to provide a further understanding of the invention and are incorporated in and constitute a part of this application, illustrate embodiments of the invention and together with the description serve to explain the principle of the invention. In the drawings:
FIG. 1 is a block diagram schematically illustrating a configuration of a general wireless communication system;
FIG. 2 is a diagram illustrating a configuration of a terminal according to a first embodiment of the present invention;
FIG. 3 is a flowchart illustrating a method (performed by a terminal) of mitigating interference caused by a base station, according to a first embodiment of the present invention;
FIG. 4 is a diagram illustrating a configuration of a base station according to a first embodiment of the present invention;
FIG. 5 is a flowchart illustrating a method (performed by a base station) of mitigating interference caused by another base station, according to a first embodiment of the present invention;
FIG. 6 is a block diagram schematically illustrating a configuration of each of a base station and a terminal according to a second embodiment of the present invention;
FIG. 7 is a flowchart illustrating a method (performed by a base station) of mitigating interference caused by the base station, according to a second embodiment of the present invention; and
FIG. 8 is a flowchart illustrating a method (performed by a terminal) of mitigating interference caused by a base station, according to a second embodiment of the present invention.

### [Mode for Invention]

In the following description, for convenience of a description, a user and a terminal will be described as the same concept, and, a cell and a base station will be described as the same concept.

Hereinafter, embodiments of the present invention will be described in detail with reference to the accompanying drawings.

### First Embodiment

FIG. 2 is a diagram schematically illustrating a terminal configuring a wireless communication system according to a first embodiment of the present invention. A terminal 200 of FIG. 2 mitigates interference caused by base stations (not shown) which are located near the terminal 200.

In FIG. 2, for convenience of a description, among all elements configuring the terminal 200, only elements used for implementing the present invention are illustrated. The terminal 200 may further include other general elements for receiving a communication service.

As illustrated in FIG. 2, the terminal 200 according to the embodiment of the present invention includes an interference signal measurer 210, a channel information determiner 220, and a message sender 230. The terminal 200 is not yet camped on all of neighboring base stations.

Here, an uncamped-on terminal denotes a terminal in which a base station for providing a service to the terminal is not determined, or a terminal that does not access a base station for providing a service thereto.

The interference signal measurer 210 determines whether there is a base station accessible to the terminal 200 among one or more base stations located near the terminal 200. Here, the base stations include all small base stations and macro stations located near the terminal 200.

When it is determined that there is no base station accessible to the terminal 200, the interference signal measurer 210 measures interference signals of the respective base stations.

In an embodiment, the interference signal of each of the base stations may be Reference Signal Received Power (RSRP). The interference signal measurer 210 may acquire RSRP by using a reference signal transmitted from each base station.

The channel information determiner 220 sequentially determines channel information, which is capable of minimizing transmission power of each base station among channel information of the respective base stations, by base station according to magnitude of an interference signal measured by the interference signal measurer 210 until a base station accessible to the terminal 200 is found.

In an embodiment, the channel information may be a Precoding Matrix Indicator (PMI) for minimizing the transmission power of a corresponding base station for the terminal 200.

In the above-described embodiment, it has been described that the channel information determiner 220 sequentially determines channel information by base station according to magnitude of interference signal. However, in a modification embodiment, the channel information determiner 220 may determine channel information for minimizing the transmission power of each base station among the channel information of the respective base station, for all base stations in which the magnitude of the interference signal is equal to or higher than a reference value.

The message sender 230 generates a message including channel information determined by the channel information determiner 220, and sends the generated message to a corresponding base station.

In an embodiment, the message sender 230 may generate the message, including the channel information, in the same message format as that of a resource allocation request message.

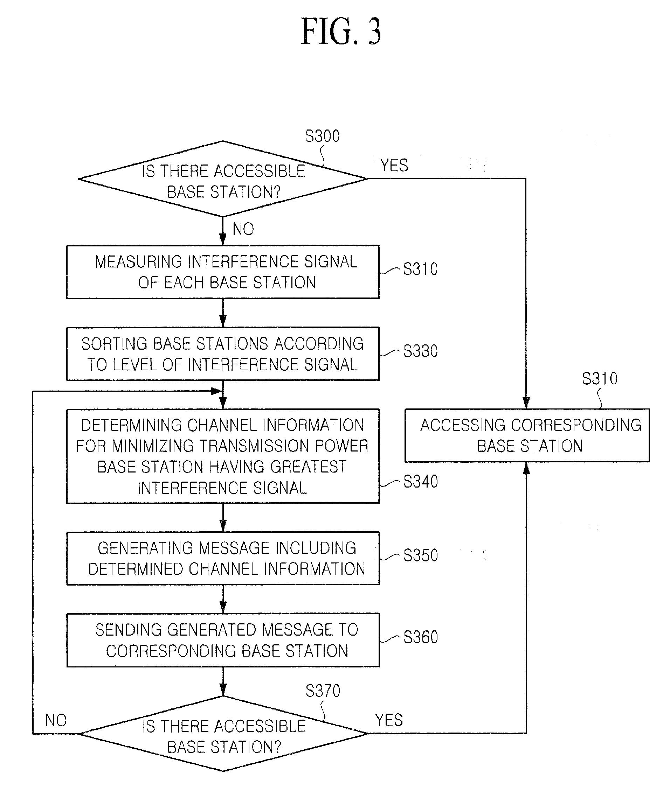

Hereinafter, a method (performed by the terminal) of mitigating interference caused by a base station will be described with reference to FIG. 3.

In operation S300, first, the terminal determines whether there is a base station accessible to the terminal among base stations located near the terminal.

When it is determined that there is the base station accessible to the terminal, the terminal accesses a corresponding base station in operation S310.

When it is determined in operation S300 that there is no base station accessible to the terminal, the terminal measures interference signals of the respective base stations in operation S320. In an embodiment, each of the interference signals may be RSRP.

Subsequently, the terminal arrays one or more base stations according to magnitude of an interference signal in operation S330, and determines channel information for minimizing transmission power of a corresponding base station among channel information of the corresponding base station, for the corresponding base station having the greatest interference signal magnitude among the one or more base stations in operation in operation S340. In an embodiment, the channel information may be an PMI.

Subsequently, the terminal generates a message including the channel information (determined in operation S340) in operation S350, and sends the generated message to the corresponding base station in operation S360. In an embodiment, the message may have the same message format as that of a resource allocation request message with which the terminal requests resource allocation from a base station.

Subsequently, the terminal again determines whether there is a base station accessible to the terminal among base stations located near the terminal in operation S370. When it is determined that there is the base station accessible to the terminal, the terminal accesses the base station in operation S310.

When it is determined in operation S370 that there is no base station accessible to the terminal, the terminal again performs operations S340 to S370 for a base station having the second greatest interference signal magnitude according to magnitude of the interference signal.

Through such operations, the present invention can prevent that a terminal cannot receive a sync signal or control signal of an accessible base station due to transmission power of the base station which is located near the terminal but cannot access the terminal.

In the above-described embodiment, it has been described that the terminal 200 sequentially determines channel information by base station according to magnitude of interference signal. However, in a modification embodiment, the terminal 200 may determine channel information for minimizing the transmission power of each base station among the channel information of the respective base station, for all base stations in which the magnitude of the interference signal is equal to or higher than a reference value, and may transmit the determined channel information to each base station.

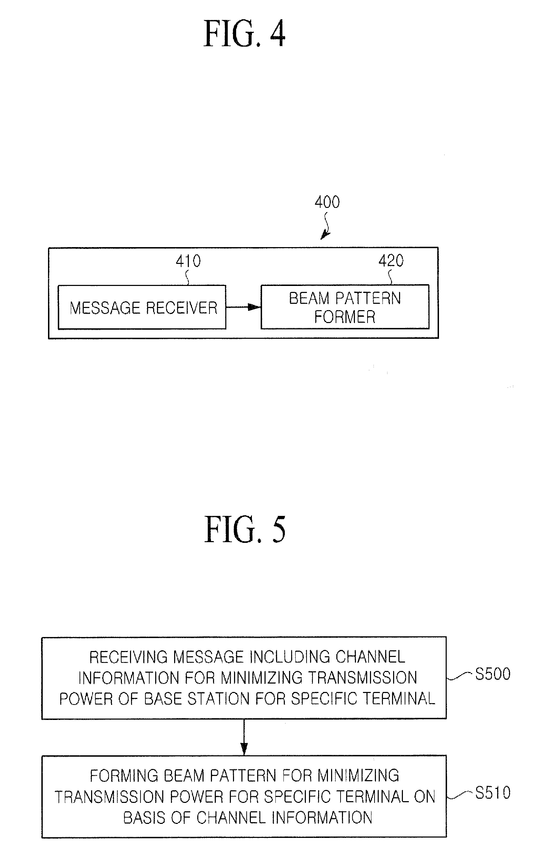

FIG. 4 is a diagram illustrating a configuration of a base station according to a first embodiment of the present invention. In an embodiment, a base station 400 of FIG. 4 may be a Closed Subscriber Group (CSG) type in which only a pre-approved subscriber is accessible to the base station 40. Also, the base station 400 of FIG. 4 may be a small base station located in a macro cell.

In FIG. 4, for convenience of a description, among all elements configuring the base station 400, only elements used for implementing the present invention are illustrated. The base station 400 may further include other general elements for providing a communication service.

First, a message receiver 410 receives a message, including channel information for minimizing transmission power for a terminal, from the terminal which is not camped on the base station 400. In an embodiment, the channel information may be a PMI for minimizing the transmission power of the base station 400 for the terminal.

Moreover, the message including the channel information may have the same message format as that of a resource allocation request message with which the terminal requests resource allocation from the base station 400.

A beam pattern former 420 forms a beam pattern that enables the minimization of transmission power for the terminal, on the basis of the received channel information.

The base station 400 transmits communication data to the terminal according to the formed beam pattern.

In an embodiment, the beam pattern former 420 may transmit the communication data according to the beam pattern only for a predetermined time.

This is because after the predetermined time elapses, interference to the terminal can be mitigated by using information transmitted from a specific base station (accessing the terminal) through a backhaul between the base station 400 and the specific base station accessing the terminal.

As described above, the base station 400 enables the minimization of transmission power for a terminal which is located near the base station 400 but is incapable of allowing an access to the base station 400, thus preventing that the terminal cannot receive a sync signal or control signal of another base station (for example, macro base station) due to interference caused by transmission power of the base station 400.

Hereinafter, a method (performed by the above-described base station) of mitigating interference will be described with reference to FIG. 5.

FIG. 5 is a flowchart illustrating a method (performed by the base station) of mitigating interference.

Referring to FIG. 5, first, the base station receives a message, including channel information for minimizing transmission power, from a terminal in operation S500.

Subsequently, the base station forms a beam pattern enabling the minimization of the transmission power for the terminal, on the basis of the channel information in operation S510.

Subsequently, although not shown, the base station transmits communication data to the terminal according to the formed beam pattern.

In an embodiment, the base station may transmit the communication data according to the beam pattern only for a predetermined time.

This is because after the predetermined time elapses, interference to the terminal can be mitigated by using information transmitted from a specific base station (accessing the terminal) through a backhaul between the base station and the specific base station accessing the terminal.

### Second Embodiment

In the above-described embodiment, it has been described that, by decreasing transmission power of a base station acting as an interference source for a terminal, the present invention mitigates interference caused by the base station, and thus enables the terminal to normally receive a communication service from a macro base station. However, in a second embodiment, the present invention enables the terminal to normally receive a communication service from a macro base station through a more active scheme.

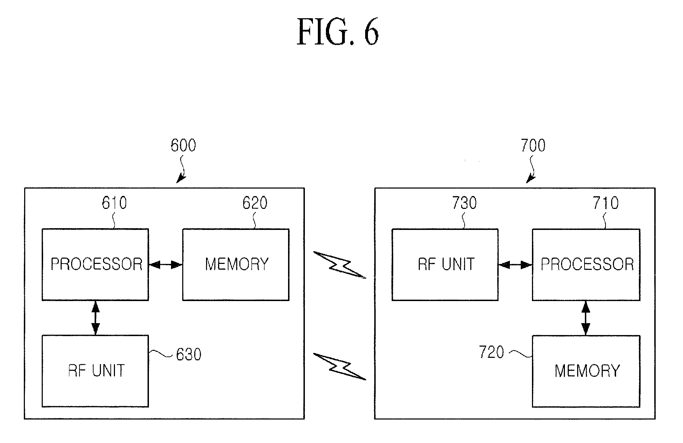

Hereinafter, the second embodiment will be described in more detail with reference to FIGS. 6 to 8.

FIG. 6 is a block diagram schematically illustrating a configuration of each of a base station and a terminal according to a second embodiment of the present invention.

A base station 600 of FIG. 6 manages small cell included in a macro cell managed by a macro base station, and may be a femto base station being the CSG type. Also, a terminal 700 is a terminal that receives a communication service from the macro base station, and may be a terminal that is not included in a CSG of the base station 600.

As illustrated in FIG. 6, the base station 600 includes a processor 610, a memory 620, and a Radio Frequency (RF) unit 630.

The processor 610 receives an access request from the terminal 700 which receives a communication service from a macro base station. When the access request is received from the terminal 700, the processor 610 determines a degree of interference affecting the terminal 700.

In an embodiment, the base station 600 may determine a degree of interference affecting the terminal 700 on the basis of information transmitted from the macro base station or by using the intensity of signal received from the terminal 700.

Moreover, when it is determined that the degree of interference to the terminal 700 is equal to or greater than a threshold value, the processor 610 allocates a resource for the terminal 700, and transmits data to the terminal 700 through the allocated resource. Here, the data transmitted to the terminal 700 may include a downlink control signal and downlink data.

When it is determined that the degree of interference to the terminal 700 is less than the threshold value, the processor 610 does not allocate a resource for the terminal 700, thereby disallowing an access of the terminal 700 to the base station 600.

Moreover, even when the degree of interference caused by the base station 600 is equal to or greater than the threshold value, the processor 610 may allocate a resource to the terminal 700 in additional consideration of the number of terminals, receiving the communication service from the macro base station, among a plurality of terminals which have already accessed the base station 600.

Specifically, before a resource allocation request is received from the terminal 700, when the number of terminals (receiving the communication service from the macro base station) among a plurality of terminals accessing the base station 600 is equal to or greater than a reference value, the processor 610 does not allocate a resource to the terminal 700. Only when the number of terminals is less than the reference value, the processor 610 may allocate a resource to the terminal 700.

This is because, since the base station 600 is a base station being the CSG type in which only a predetermined specific terminal is accessible to the base station, only the predetermined specific terminal should be accessible to the base station 600, but, since the present invention exceptively allows an access of a terminal affected by interference caused by a base station, it is required to restrict the number of terminals accessible to a base station.

In addition, the processor 610 performs general functions, which are performed by a base station, such as determination of a transmission mode for a terminal and scheduling.

The memory 620 is connected to the processor 610, and stores various information for driving the processor 610.

The RF unit 630 is connected to the processor 610. The RF unit 610 receives an access request for the base station 600 from the terminal 700, and transmits data to the terminal 700.

In addition, the RF unit 630 may receive the access request or channel state information from the terminal 700, and transfer the access request or channel state information to the processor 610.

The terminal 700 includes a processor 710, a memory 720, and an RF unit 730.

The processor 710 determines whether interference is caused by the base station. In an embodiment, when the intensity of a signal transmitted from the base station 600 is equal to or greater than a reference value, the processor 710 may determine that interference is caused by the base station 600.

In another embodiment, when a downlink control signal is not receive from the macro base station within a predetermined time or is not normally received even though the downlink control signal is received, the processor 710 may determined that interference is caused by the base station 600.

Moreover, when it is determined that interference is caused by the base station 600, the processor 710 generates an access request for the base station 600, and transfers the access request to the RF unit 730.

In an embodiment, when it is determined that a plurality of base stations cause interference, the processor 710 may generate an access request for a base station causing the greatest interference among the base stations causing interference, and transfer the access request to the RF unit 730.

Subsequently, in response to the access request, the processor 710 receives data transmitted from the base station through the RF unit 730, and processes the received data.

In addition, layers of a wireless interface protocol may be implemented by the processor 710.

The memory 720 is connected to the processor 710, and stores various information for driving the processor 710.

The RF unit 730 transmits the access request to the base station 600, and, when a resource is allocated by the base station 600 in response to the access request, the RF unit 730 receives data from the base station 600 through the allocated resource. In an embodiment, the data received from the base station 600 may include a downlink control signal and downlink data.

Subsequently, the RF unit 730 transfers the received data to the processor 710.

In the above-described embodiment, each of the processors 610 and 710 may include an Application Specific Integrated Circuit (ASIC), a chipset, a logic circuit, a data processing device, and/or a converter that performs mutual conversion between a baseband signal and an RF signal.

Each of the memories 620 and 720 may include a Read Only Memory (ROM), a Random Access Memory (RAM), a flash memory, a memory card, a storage medium, and/or a storage device. Each of the RF units 630 and 730 may include one or more antennas that transmit and/or receive an RF signal.

When the above-described embodiment is realized in software, the above-described scheme may be realized as a module (operation, function, etc.) performing the above-described function. The module may be stored in the memories 620 and 720, and executed by each of the processors 610 and 710. The memory 620 may be disposed inside or outside the processor 610, and the memory 720 may be disposed inside or outside the processor 710. Also, the memories 620 and 720 may be respectively connected to the processors 610 and 710 through various well-known means.

Hereinafter, a method (performed by a base station) of mitigating interference according to a second embodiment of the present invention will be described in detail.

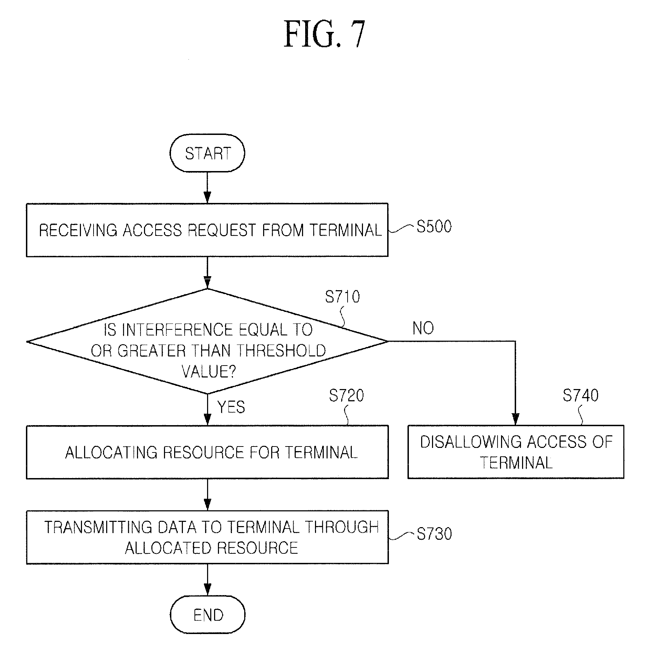

FIG. 7 is a flowchart illustrating a method (performed by a base station) of mitigating interference according to the second embodiment of the present invention.

Referring to FIG. 7, first, a base station receives an access request from a terminal which receives a service from a macro base station in operation S700.

In an embodiment, as described above with reference to FIG. 1, the macro base station is located in a macro cell, and provides a communication service to a terminal.

Moreover, as illustrated in FIG. 1, the base station manages small cell included in the macro cell, and may be a femto base station being the CSG type in which only a predetermined specific terminal is accessible to the base station.

Subsequently, the base station determines a degree of interference affecting the terminal in operation S710.

In an embodiment, the base station may determine the degree of interference affecting the terminal on the basis of information transmitted from the macro base station.

In another embodiment, the base station may determine the degree of interference affecting the terminal by using the intensity of a signal received from the terminal.

Subsequently, when it is determined that the degree of interference to the terminal is equal to or greater than a threshold value, the base station allocates a resource for the terminal in operation 720, and transmits data to the terminal through the allocated resource in operation S730. Here, the data transmitted to the terminal may include a downlink control signal and downlink data.

On the other hand, when it is determined in operation S710 that the degree of interference is less than the threshold value, the base station does not allocate a resource for the terminal 700, thereby disallowing an access of the terminal in operation S740.

In the above-described embodiment, it has been described that the base station allocates a resource to the terminal when the degree of interference caused by the base station is equal to or greater than the threshold value.

However, in a modification embodiment, even when the degree of interference caused by the base station is equal to or greater than the threshold value, the base station may allocate a resource to the terminal in additional consideration of the number of terminals, receiving the communication service from the macro base station, among a plurality of terminals which have already accessed the base station.

Specifically, before the terminal transmits a resource allocation request to the base station, when the number of terminals accessing the base station is equal to or greater than a reference value, the base station does not allocate a resource to the terminal. Only when the number of terminals is less than the reference value, the base station may allocate a resource to the terminal.

This is because, since the base station is a base station being the CSG type in which only a predetermined specific terminal is accessible to the base station, only the predetermined specific terminal should be accessible to the base station, but, since the present invention exceptively allows an access of a terminal instead of a predetermined terminal, it is required to restrict the number of terminals accessible to a small base station among a plurality of terminal which receive a communication service from the macro base station.

As described above, when a small base station being the CSG type causes interference to a terminal, the present invention allows a terminal (which is inaccessible to a corresponding base station because the terminal is not included in a CSG of the base station under a normal communication environment) to access the base station, thereby enabling the terminal to receive a normal communication service.

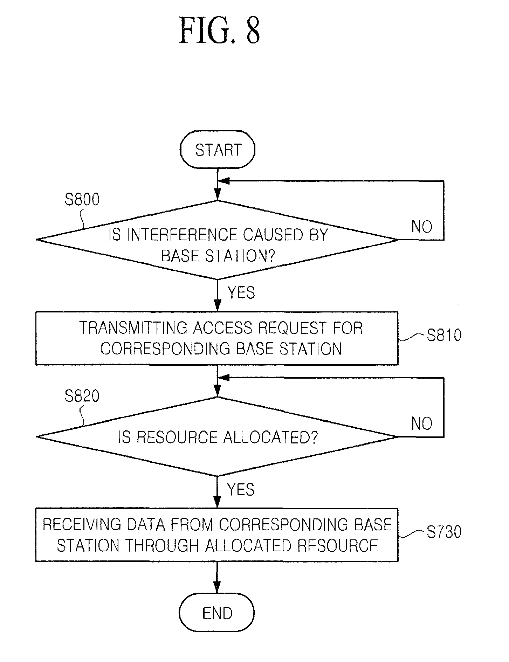

FIG. 8 is a flowchart illustrating a method (performed by a terminal) of mitigating interference, according to a second embodiment of the present invention.

First, a terminal determines whether interference is caused by a base station in a downlink, in operation S800.

Here, the base station may be a femto base station being the CSG type. In this case, the terminal is not a terminal included in a CSG of the base station, and thus cannot access the base station under a normal communication environment.

In an embodiment, when the intensity of a signal transmitted from the base station is equal to or greater than a reference value, the terminal may determine that interference is caused by the base station.

In another embodiment, when a downlink control signal is not receive from a macro base station (which is a serving base station for the terminal) within a predetermined time or is not normally received even though the downlink control signal is received, the terminal may determine that interference is caused by the base station.

When it is determined in operation S800 that interference is caused by the base station, the terminal transmits an access request for the base station, causing interference, to the base station in operation S810.

Subsequently, when the base station allocates a resource to the terminal in response to the access request in operation S820, the terminal) receives data from the base station through the allocated resource in operation S830.

In an embodiment, the data received from the base station may include a downlink control signal and downlink data.

When it is determined in operation S800 that a plurality of base stations cause interference, the terminal may transmit the access request for a base station causing the greatest interference among the base stations causing interference in operation S810.

As described above, when a terminal cannot normally receive a communication service due to interference caused by a small base station being the CSG type, the terminal directly accesses the small base station being the CSG type, and thus can receive a normal communication service.

The above-described method of mitigating interference caused by base stations may be implemented in the form of a program executable with various computer means, in which case a program for executing the method of mitigating interference is stored in a computer-readable record medium such as a hard disk, a CD-ROM, a DVD, a ROM, a RAM, or a flash memory.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of mitigating interference caused by a base station, comprising:
(a) determining whether there is an accessible base station among one or more base stations; and
(b) sequentially determining channel information, which enables minimization of transmission power of each of the base stations , by base station among channel information between each of the base stations and a terminal to transmit the determined channel information to each of the base stations until an accessible base station is found when there is no accessible base station.

2. The method of claim 1, wherein in operation (b), the channel information determined by base station is determined according to magnitude of an interference signal in the one or more base stations.

3. The method of claim 1, wherein the channel information is a Precoding Matrix Indicator (PMI) for minimizing transmission power of a corresponding base station.

4. The method of claim 1, wherein the interference signal is Reference Signal Received Power (RSRP) of each of the base stations.

5. The method of claim 1, wherein operation (b) comprises:
(b1) measuring an interference signal of each of the base stations when there is no accessible base station;
(b2) determining channel information for minimizing transmission power of a base station having a greatest interference signal magnitude among the one or more base stations;
(b3) transmitting the determined channel information to the base station having the greatest interference signal magnitude;
(b4) determining whether there is the accessible base station among the one or more base stations; and
(b5) again performing operations (b2) to (b4) on each of the base stations according to magnitude of the interference signal until an accessible base station is found when there is no accessible base station.

6. The method of claim 1, wherein the channel information is included into a message having the same message format as a resource allocation request message, and transmitted to a corresponding base station.

7. A method of mitigating interference caused by a base station, comprising:
receiving a message, comprising a Precoding Matrix Indicator (PMI) for minimizing transmission power for a terminal among a plurality of PMIs for the base station, from the terminal; and
forming a beam pattern for the terminal on the basis of the PMI comprised in the message.

8. The method of claim 7, wherein the terminal is a terminal which is not camped on the base station.

9. A terminal, comprising:
an interference signal measurer measuring, when there is no accessible base station among one or more base stations, an interference signal of each of the base stations;
a channel information determiner sequentially determining channel information, which enables minimization of transmission power of each of the base stations, by base station among channel information on the each of the base stations until the accessible base station is found; and
a message sender generating a message comprising the determined channel information, and sending the generated message to a corresponding base station.

10. The terminal of claim 9, wherein the channel information determiner determines channel information by base station according to magnitude of an interference signal in the one or more base stations.

11. The terminal of claim 9, wherein the channel information is a Precoding Matrix Indicator (PMI) for minimizing transmission power of each of the base stations.

12. The terminal of claim 9, wherein the interference signal is Reference Signal Received Power (RSRP) of each of the base stations.

13. The terminal of claim 9, wherein the message has the same message format as a resource allocation request message.

14. A base station, comprising:
a message receiver receiving a message, comprising a Precoding Matrix Indicator (PMI) for minimizing transmission power for an uncamped-on terminal, from the terminal; and
a beam pattern former forming a beam pattern for the terminal on the basis of the received PMI.

15. The base station of claim 14, wherein the base station is a Closed Subscriber Group (CSG) type.

16. The base station of claim 14, wherein the base station transmits communication data according to the formed beam pattern for a predetermined time.

17. A method of mitigating interference caused by a base station, comprising:
receiving an access request from a first terminal that receives a service from a first base station;
allocating a resource for the first terminal when the access request is received; and
transmitting data to the first terminal through the allocated resource,
wherein the base station is a small base station being a Closed Subscriber Group (CSG) type, and the first terminal is not included in a CSG of the base station.

18. The method of claim 17, further comprising determining a degree of interference caused to the first terminal by the base station,
wherein in the allocating of a resource, when the degree of interference to the first terminal is determined as being equal to or greater than a threshold value, the resource is allocated to the first terminal.

19. The method of claim 17, further comprising determining the number of second terminals, which have already accessed the base station, among a plurality of terminals receiving a service from the first base station,
wherein in the allocating of a resource, when the number of second terminals that have already accessed the base station is equal to or less than a reference value, the resource is allocated to the first terminal.

20. The method of claim 17, further comprising determining a resource use rate of the base station,
wherein in the allocating of a resource, when the resource use rate of the base station is equal to or less than a predetermined value, the resource is allocated to the first terminal.

21. The method of claim 17, wherein the first base station is a macro base station that manages a macro cell comprising small cell managed by the base station.

22. A method of mitigating interference caused by a base station, comprising:
determining whether interference to a terminal is caused by the base station in a downlink;
transmitting an access request for the base station when it is determined that interference is caused by the base station; and
receiving, when a resource is allocated by the base station in response to the access request, data from the base station through the allocated resource.

23. The method of claim 22, wherein in the determining of interference, when a downlink control signal is not received from a first base station providing a service to the terminal or the downlink control signal received from the first base station is abnormal, interference is determined as being caused by the base station.

24. The method of claim 22, wherein the first base station is a macro base station that manages a macro cell comprising small cell managed by the base station.

25. The method of claim 22, wherein in the determining of interference, when intensity of a signal transmitted from the base station is at least greater by a threshold value than a signal transmitted from a first base station providing a service to the terminal, interference is determined as being caused by the base station.

26. The method of claim 22, wherein,
the base station is a small base station being a Closed Subscriber Group (CSG) type, and
the terminal is not included in a CSG of the base station.

27. The method of claim 22, wherein in the transmitting of an access request, when a plurality of the base stations cause interference, the access request is transmitted to a base station causing greatest interference among the base stations.

28. A base station, comprising:
a processor allocating a resource to a terminal when an access request is received from the terminal receiving a service from a macro base station; and
an RF unit transmitting a downlink control signal and downlink data to the terminal through the resource allocated by the processor,
wherein the terminal is not included in a Closed Subscriber Group (CSG) of the base station.

29. The base station of claim 28, wherein the processor additionally determines the number of terminals receiving the service from the macro base station among a plurality of terminals accessing the base station, and, when the number of terminals accessing the base station is less than a reference value, the processor allocates a resource for the terminal.

30. The base station of claim 28, wherein the processor determines a resource use rate of the base station, and, when the resource use rate is equal to or less than a predetermined value, the processor allocates the resource for the terminal.

31. The base station of claim 28, wherein the processor determines a degree of interference to the terminal, and, when the degree of interference to the terminal is equal to or less than a threshold value, the processor allocates the resource for the terminal.

32. A terminal, comprising:
a processor determining whether interference is caused by a femto base station being a Closed Subscriber Group (CSG) and, when it is determined that interference is caused by the femto base station, generating an access request for the femto base station; and
an RF unit transmitting the access request generated by the processor to the femto base station, and receiving a downlink control signal and downlink data from the femto base station through the resource allocated by the femto base station in response to the access request.

33. The terminal of claim 32, wherein the terminal is not included in the Closed Subscriber Group (CSG) of the femto base station.

34. The terminal of claim 32, wherein when intensity of a signal transmitted from the femto base station is at least greater by a threshold value than intensity of a signal transmitted from a serving base station for the terminal, a downlink control signal is not received from the serving base station within a predetermined time, or the downlink control signal received from the serving base station is abnormal, the processor determines that interference is caused by the femto base station.

35. The terminal of claim 32, wherein when it is determined that a plurality of femto base stations cause interference, the processor generates an access request for a femto base station causing greatest interference among the femto base stations causing interference.
